# EUROPÄISCHE PATENTSCHRIFT

(11) **EP 2 768 692 B1**
(45) Veröffentlichungstag und Bekanntmachung des Hinweises auf die Patenterteilung: **12.04.2017**
(21) Anmeldenummer: 12772074.6
(22) Anmeldetag: 05.10.2012
(51) Int. Cl.: B60L 11/18, H01F 38/14, H01F 27/02, H02J 7/02

(54) **SEKUNDÄRTRANSFORMATOREINHEIT ZUR ANBRINGUNG AN EINEM FAHRZEUG MIT ELEKTROANTRIEB UND FAHRZEUG MIT ELEKTROANTRIEB**
SECONDARY COIL FOR INSTALLATION ON A VEHICLE WITH ELECTRIC DRIVETRAIN AND VEHICLE WITH ELECTRIC DRIVETRAIN
ENSEMBLE TRANSFORMATEUR SECONDAIRE DESTINÉ À ÊTRE MONTÉ SUR UN VÉHICULE À PROPULSION ÉLECTRIQUE ET VÉHICULE À PROPULSION ÉLECTRIQUE

(30) Priorität: 18.10.2011 DE 102011116250
(43) Veröffentlichungstag der Anmeldung: 27.08.2014
(73) Patentinhaber: Audi AG, 85045 Ingolstadt (DE)
(72) Erfinder: ELIAS, Björn, 85120 Hepberg (DE); OHLEN, Christian, 85080 Gaimersheim (DE); EBNER, Anca, 85088 Vohburg (DE)
(74) Vertreter: Herbst, Matthias Heinz
(86) Internationale Anmeldenummer: PCT/EP2012/004174
(87) Internationale Veröffentlichungsnummer: WO 2013/056791

(56) Entgegenhaltungen:
- DE-A1-102009 023 409
- DE-U1-202010 007 613
- US-A- 5 656 983
- US-A1- 2009 189 458
- US-A1- 2010 201 309
- US-A1- 2010 277 121

## Beschreibung

Die Erfindung betrifft eine Sekundärtransformatoreinheit zur Anbringung an einem Fahrzeug mit Elektroantrieb gemäß dem Oberbegriff des Anspruchs 1 und ein Fahrzeug mit Elektroantrieb.

Im Stand der Technik sind Kraftfahrzeuge mit Elektroantrieb, wie beispielsweise Hybridautos und reine Elektroautos bekannt, die Traktionsakkumulatoren für die elektrische Energieversorgung eines Elektromotors umfassen. Diese bekannten Kraftfahrzeuge sind mit einem System zur induktiven Energieübertragung ausgestattet, das auch ein häufiges Nachladen der Akkumulatoren mit hohem Bedienkomfort ermöglicht. Dieses System funktioniert nach Art eines Transformators und umfasst eine Primärtransformatoreinheit, die infrastrukturseitig, beispielsweise an der Rückwand einer Garage angebracht ist, und eine Sekundärtransformatoreinheit, die an der Front des Kraftfahrzeugs hinter dem vorderen Nummernschild integriert ist.

Die Druckschrift DE 10 2009 023 409 A1 betrifft ein System zur elektrischen Energieübertragung und bildet die Basis für den Oberbegriff des Anspruchs 1. Diese Druckschrift offenbart eine Sekundärtrafoeinheit oder Sekundärtransformatoreinheit, die am Bug oder an der Front eines Elektrofahrzeugs angebracht ist und einen U-förmigen Halbtrafokern und eine auf diesen schiefwinklig aufgewickelte Spulenwicklung enthält. Diese Sekundärtrafoeinheit ist an der vorderen Stoßstange des Elektrofahrzeugs montiert, und das vordere Nummernschild des Elektrofahrzeugs ist an der Sekundärtrafoeinheit montiert.

Da diese bekannte Sekundärtrafoeinheit am Bug des Fahrzeugs angebracht ist, muss sie in einem Bereich des Fahrzeugs integriert werden, der einen hohen Einfluss auf das Crashverhalten bei Fußgängerunfällen hat. Insbesondere wird der Frontbereich des Fahrzeugs durch die zusätzlich zu montierenden Bauteile, insbesondere den üblicherweise aus Elektroblechen oder Ferrit bestehenden Halbtrafokern, härter, jedoch ist eine möglichst gut definierte und weiche Fahrzeugfront notwendig, um das Verletzungsrisiko von Fußgängern minimal zu halten. Da die bekannte Sekundärtrafoeinheit hinter dem vorderen Nummernschild an der vorderen Stoßstange montiert wird, bleibt weniger Bauraum für Deformationselemente aus Schaumstoff, die zwischen Stoßstange und Fahrgastzelle angeordnet sind, übrig, sodass deren Dicke, also deren Ausdehnung in Fahrtrichtung, reduziert werden muss. Dies führt zu einer weiteren Erhöhung der Härte der Fahrzeugfront.

Die DE 24 34 890 B1 beschreibt eine Vorrichtung zum Verbinden eines in einem Kraftfahrzeug angeordneten Ladegeräts mit einem Wechsel- oder Drehstromnetz. Die Vorrichtung besteht dabei aus einem in zwei Teile geteilten Transformator, wobei die zwei Teile jeweils einen Kern aufweisen auf welchem jeweilige Primär- und Sekundärwicklungen angeordnet sind. Das mit einem Wechselstromnetz verbundene Transformatorteil, welches die Primärwicklungen aufweist, ist dabei in einer Ladeplanke eines Stillstandplatzes angeordnet und das Transformatorteil mit den Sekundärwicklungen ist in einer Stoßstange des Kraftfahrzeugs befindlich. Zum Schutz der Transformatorteile vor Korrosion sind diese mit einer Kunststoffummantelung versehen.

Die DE 37 18 676 A1 beschreibt einen Formkörper aus Verbundwerkstoff insbesondere aus Hybridwerkstoff von faserverstärktem Kunststoff und Metall mit einem folienartigen oder schichtartigen oder schwammigen oder netzartigen Kern, der in Kunststoff eingebettet ist. Die Verstärkungsfasern können dabei aus Aramid, Kohlenstoff und/oder Glas bestehen.

Die US 2010/201309 A1 beschreibt eine Ladeeinrichtung zum induktiven Laden eines Kraftfahrzeugs. Das Kraftfahrzeug weist dabei eine Sekundärtransformatoreinheit mit einem Sekundärkern und einer Sekundärspule auf, welche an einer Vorderseite des Kraftfahrzeugs im Bereich des vorderen Nummernschildes angeordnet ist. Weiterhin weist die Sekundärtransformatoreinheit ein Gehäuse auf, das den Sekundärkern und die Sekundärspule umgibt und eine vorderseitige, das heißt dem Fahrzeug abgewandte, Öffnung zur Aufnahme einer Primärtransformatoreinheit aufweist. Des Weiteren sind vorderseitig an der Öffnung des Gehäuses zwei Abdeckplatten angeordnet, mit welchen die Öffnung verschließbar ist und die bei Bedarf geöffnet und geschlossen werden können. Weiterhin ist vorderseitig an der Sekundärspule eine Verschleißplatte angeordnet, um den Sekundärkern vor Beschädigung zu schützen.

Die US 5 656 983 A beschreibt eine Transformatoranordnung mit einer Primärtransformatoreinheit und einer mit dieser induktiv koppelbaren Sekundärtransformatoreinheit. Diese Einheiten weisen dabei jeweils einen Kern und eine an dem Kern angeordnete Spule auf. Zum Schutz des Kerns vor einem Zerbrechen bei der Kopplung der Primär- und Sekundärtransformatoreinheit ist an der Kopplungsseite zumindest einer der Transformatoreinheiten eine Schutzschicht aufgebracht.

Die US 2010/277121 A1 beschreibt eine Anordnung für ein kabelloses Leistungsübertragungssystem mit einem High-Q-Resonator zum Erzeugen eines oszillierenden magnetischen Feldes und einem Fahrzeug mit einem weiteren Resonator. Der weitere Resonator kann dabei im Fahrzeug angeordnet sein und ein Gehäuse aufweisen.

Die US 2009/189458 A1 beschreibt eine Transformatoranordnung zum induktiven Laden eines Kraftfahrzeugs mit einer Primär- und einer Sekundärtransformatoreinheit. Die Sekundärtransformatoreinheit weist dabei eine in einer Heckscheibe eines Kraftfahrzeugs angeordnete Sekundärspule auf.

Die Aufgabe der Erfindung besteht darin, eine Sekundärtransformatoreinheit gemäß dem Oberbegriff des Anspruchs 1 und ein Fahrzeug mit Elektroantrieb mit einer derartigen Sekundärtransformatoreinheit in Hinblick auf das Crashverhalten bei Fußgängerunfällen zu verbessern.

Diese Aufgabe wird durch eine Sekundärtransformatoreinheit gemäß Anspruch 1 und ein Fahrzeug mit Elektroantrieb gemäß Anspruch 7 gelöst. Weitere Ausführungsformen sind in den Unteransprüchen beschrieben.

Die Erfindung beruht auf der Erkenntnis, dass der Halbtrafokern, der üblicherweise aus Elektroblechen oder Ferrit besteht, bei einem Unfall zerbrechen oder zerreißen kann, so dass scharfkantige, harte Bruchstücke entstehen, die insbesondere für einen beteiligten Fußgänger ein erhöhtes Verletzungsrisiko darstellen.

Die Erfindung schlägt gemäß einem ersten Aspekt eine Sekundärtransformatoreinheit zur Anbringung an einem Fahrzeug mit Elektroantrieb vor, umfassend
- wenigstens einen Sekundärkern mit einer Vorderseite und einer Rückseite, die den Sekundärkern in einer ersten (x) begrenzen, und einer Oberseite und einer Unterseite, die den Sekundärkern in einer zweiten (z) begrenzen;
- wenigstens eine Sekundärspule, die an dem Sekundärkern angeordnet ist;
- wenigstens eine Außenhaut, die zumindest ganzen Sekundärkern umhüllt, so dass die Außenhaut gleichzeitig die Vorderseite, die Rückseite, die Oberseite und die Unterseite des Sekundärkerns vollständig bedeckt, und die Verstärkungsfasern enthält, um dazu ausgebildet zu sein, bei einem Zerbrechen des Sekundärkerns scharfkantige, harte Bruchstücke innerhalb der Außenhaut zurückzuhalten, wobei die Außenhaut nur den Sekundärkern umhüllt.

Da die Außenhaut den Sekundärkern zumindest teilweise umhüllt, kann sie scharfkantige, harte Bruchstücke des beispielsweise Elektrobleche und/oder Elektrobänder und/oder Ferrit enthaltenden Sekundärkerns, der bei einem Unfall zerbrochen oder zerrissen ist, auffangen und zurückhalten, sodass das Verletzungsrisiko insbesondere für einen beteiligten Fußgänger verringert wird.

Die Außenhaut kann nach Bedarf auf beliebige Art und Weise ausgebildet sein, beispielsweise derart, dass sie den Sekundärkern nur teilweise umhüllt oder einen Teil des Sekundärkerns nicht bedeckt oder aber den ganzen Sekundärkern umhüllt oder den Sekundärkern vollständig umhüllt.

Wenn die Außenhaut den Sekundärkern nur teilweise umhüllt, so kann sie beispielsweise als Band oder als Manschette, die an zwei gegenüber liegenden Seiten offen ist, oder als Beutel, der an einer Seite offen ist, ausgebildet sein. Das Band oder die Manschette kann bevorzugt die Vorderseite und die Rückseite des Sekundärkerns, die den Sekundärkern in einer x-Richtung begrenzen, sowie die Oberseite und die Unterseite des Sekundärkerns, die den Sekundärkern in einer z-Richtung begrenzen, bedecken, jedoch eine linke Seite und eine rechte Seite des Sekundärkerns, die den Sekundärkern in einer y-Richtung begrenzen, unbedeckt lassen. Dabei entspricht die x-Richtung der Fahrt- oder Längsrichtung des Fahrzeugs, an dem die Sekundärtransformatoreinheit angebracht werden soll, die y-Richtung der Querrichtung dieses Fahrzeugs und die z-Richtung der Vertikalrichtung dieses Fahrzeugs. Der Beutel kann bevorzugt die Vorderseite, die Rückseite, die Oberseite, die Unterseite und die linke oder rechte Seite des Sekundärkerns bedecken, jedoch die jeweils andere, also rechte beziehungsweise linke Seite des Sekundärkerns unbedeckt lassen.

Wenn die Außenhaut den Sekundärkern vollständig umhüllt, so kann sie beispielsweise als Umschlag, der an keiner Seite offen oder der allseitig geschlossen ist, ausgebildet sein. Der Umschlag kann bevorzugt die Vorderseite, die Rückseite, die Oberseite, die Unterseite, die linke Seite und die rechte Seite des Sekundärkerns bedecken oder keine Seite des Sekundärkerns unbedeckt lassen.

Es kann vorgesehen sein, dass die Außenhaut zumindest teilweise an dem Sekundärkern befestigt ist.

Dadurch wird das Auffangen, Zurückhalten und Zusammenhalten von Bruchstücken des Sekundärkerns weiter verbessert.

Das Befestigen kann nach Bedarf auf beliebige Art und Weise erfolgen, beispielsweise durch Kleben und/oder Schweißen.

Der Sekundärkern kann nach Bedarf auf beliebige Art und Weise ausgebildet sein und ist bevorzugt im Wesentlichen plattenförmig und hat beispielsweise eine Dicke in der x-Richtung, eine Breite in der y-Richtung und eine Höhe in der z-Richtung, wobei die Dicke kleiner als die Höhe und die Höhe kleiner als die Breite ist.

Ein derartiger, im wesentlicher plattenförmiger Sekundärkern kann bei einem Aufprall in x-Richtung leicht deformiert, insbesondere verbogen oder durchgebrochen werden und benötigt wenig Bauraum zwischen Stoßstange und Fahrgastzelle, sodass die in diesem, für das Frontalcrashverhalten wichtigen Bereich zu montierenden Schaumstoff-Deformationselemente eine größere Dicke, also Ausdehnung in Fahrtrichtung, haben können.

Es kann vorgesehen sein, dass die Außenhaut reißfest und/oder schnittfest ist.

Eine derartige Außenhaut kann auch scharfkantige Bruchstücke des Sekundärkerns auffangen und in ihrem Inneren zurückhalten.

Die Außenhaut kann nach Bedarf auf beliebige Art und Weise ausgebildet sein und beispielsweise ein Gewebe und/oder eine Maschenware und/oder ein Netz und/oder eine Folie aufweisen.

Die Materialien für das Gewebe, die Maschenware, das Netz und die Folie können nach Bedarf beliebig gewählt werden und enthalten beispielsweise wenigstens ein Metall und/oder wenigstens einen Gummi und/oder wenigstens einen Kunststoff und/oder Kohlenstoff und/oder wenigstens ein Silikon und/oder wenigstens ein Glas und/oder wenigstens eine Keramik.

Die Verstärkungsfasern können nach Bedarf auf beliebige Art und Weise ausgebildet sein und weisen bevorzugt Aramidfasern und/oder Glasfasern und/oder Kohlenstofffasern und/oder Metallfasern auf.

Die Erfindung schlägt gemäß einem zweiten Aspekt ein Fahrzeug mit Elektroantrieb vor, umfassend wenigstens eine der vorgeschlagenen Sekundärtransformatoreinheiten.

Es kann vorgesehen sein, dass eine der Sekundärtransformatoreinheiten an der Front des Fahrzeugs und/oder eine der Sekundärtransformatoreinheiten an dem Heck des Fahrzeugs und/oder eine der Sekundärtransformatoreinheiten an der linken Seite des Fahrzeugs und/oder eine der Sekundärtransformatoreinheiten an der rechten Seite des Fahrzeugs und/oder eine der Sekundärtransformatoreinheiten an dem Boden des Fahrzeugs und/oder eine der Sekundärtransformatoreinheiten an dem Dach des Fahrzeugs angeordnet ist.

Jedes vorgeschlagene Fahrzeug kann weiter umfassen ein vorderes Kennzeichenschild, das in Fahrtrichtung vor einer an der Front angeordneten Sekundärtransformatoreinheit angeordnet ist, und/oder ein hinteres Kennzeichenschild, das in Fahrtrichtung hinter einer an dem Heck angeordneten Sekundärtransformatoreinheit angeordnet ist.

Die Ausführungen zu einem der Aspekte der Erfindung, insbesondere zu einzelnen Merkmalen dieses Aspektes, gelten entsprechend auch analog für die anderen Aspekte der Erfindung.

Im Folgenden werden Ausführungsformen der Erfindung beispielhaft anhand der beigefügten Zeichnungen näher erläutert werden. Die daraus hervorgehenden einzelnen Merkmale sind jedoch nicht auf die einzelnen Ausführungsformen beschränkt, sondern können mit weiter oben beschriebenen einzelnen Merkmalen und/oder mit einzelnen Merkmalen anderer Ausführungsformen verbunden werden.

Die Einzelheiten in den Zeichnungen sind nur erläuternd, nicht aber beschränkend auszulegen. Die in den Ansprüchen enthaltenen Bezugszeichen sollen den Schutzbereich der Erfindung in keiner Weise beschränken, sondern verweisen lediglich auf die in den Zeichnungen gezeigten Ausführungsformen.

Die Zeichnungen zeigen in:
- Fig. 1: eine Vorderansicht einer Sekundärtransformatoreinheit in einer ersten Ausführungsform, die an einer Front eines Fahrzeugs mit Elektroantrieb angeordnet werden kann;
- Fig. 2: die Draufsicht zu der Fig. 1;
- Fig. 3: eine Vorderansicht einer Sekundärtransformatoreinheit in einer zweiten Ausführungsform; und
- Fig. 4: eine Vorderansicht eines Fahrzeugs mit Elektroantrieb in einer bevorzugten Ausführungsform.

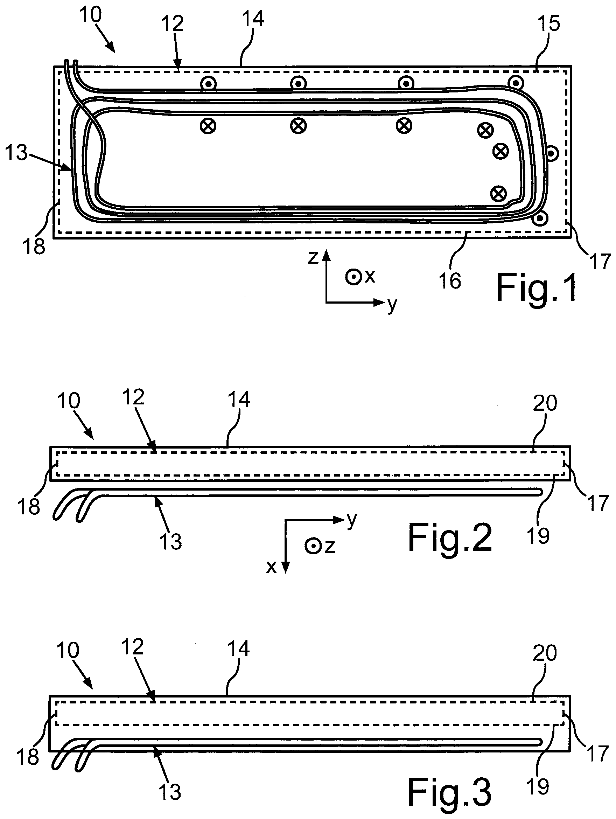

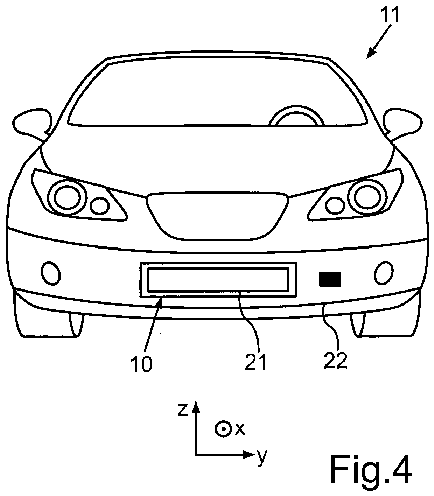

In den Fig. 1 und 2 ist eine erfindungsgemäße Sekundärtransformatoreinheit 10 in einer ersten Ausführungsform zur Anbringung an einem Fahrzeug 11 mit Elektroantrieb (Fig. 4) schematisch dargestellt. Diese Sekundärtransformatoreinheit 10 umfasst einen Sekundärkern 12, eine Sekundärspule 13, die an dem Sekundärkern 12 angeordnet ist, und eine Außenhaut 14, die den Sekundärkern 12 umhüllt.

Bei dieser ersten Ausführungsform ist der Sekundärkern 12 plattenförmig ausgebildet, besteht aus Ferrit, und hat eine Oberseite 15, eine Unterseite 16, eine linke Seite 17, eine rechte Seite 18, eine Vorderseite 19 und eine Rückseite 20. Die Oberseite 15 und die Unterseite 16 begrenzen den Sekundärkern 12 in einer z-Richtung, die in der Fig. 1 nach oben und in der Fig. 2 nach vorne aus der Papierebene heraus zeigt. Die linke Seite 17 und die rechte Seite 18 begrenzen den Sekundärkern 12 in einer y-Richtung, die in den Fig. 1 und 2 nach rechts zeigt. Die Vorderseite 19 und die Rückseite 20 begrenzen den Sekundärkern 12 in einer x-Richtung, die in der Fig. 1 nach vorne aus der Papierebene heraus und in der Fig. 2 nach unten zeigt. Dabei entspricht die x-Richtung der Fahrt- oder Längsrichtung des Fahrzeugs 11, die y-Richtung der Querrichtung des Fahrzeugs 11 und die z-Richtung der Vertikalrichtung des Fahrzeugs 11. Außerdem hat der Sekundärkern 12 in y-Richtung eine Breite, die dem Abstand zwischen der linken Seite 17 und der rechten Seite 18 entspricht, in z-Richtung eine Höhe, die dem Abstand zwischen der Oberseite 15 und der Unterseite 16 entspricht und deutlich keiner als die Breite ist, und in x-Richtung eine Dicke, die dem Abstand zwischen der Vorderseite 19 und der Rückseite 20 entspricht und deutlich kleiner als die Höhe ist.

Bei dieser ersten Ausführungsform weist die Außenhaut 14 ein reißfestes Gewebe aus Aramidfasern auf und umhüllt nur den Sekundärkern 12, nicht jedoch die Sekundärspule 13. Die Außenhaut 14 ist allseitig geschlossen wie ein Umschlag oder eine Blase, bedeckt die Oberseite 15, die Unterseite 16, die linke Seite 17, die rechte Seite 18, die Vorderseite 19 und die Rückseite 20 und ist an der Vorderseite 19 und der Rückseite 20 mit einem nicht dargestellten Klebstoff angeklebt.

Bei dieser ersten Ausführungsform ist die Sekundärspule 13 in drei im Wesentlichen rechteckigen Windungen an der Vorderseite 19 des Sekundärkerns 12 angeordnet. Eine nicht dargestellte Primärtransformatoreinheit, die einen Primärkern und eine an diesem angeordnete Primärspule umfasst, ist derart ausgebildet, dass sie, wenn sie mit geringem Abstand vor der Vorderseite 19 platziert wird und ihre Primärspule von einem Wechselstrom durchflossen wird, ein Magnetfeld erzeugt, dessen Feldlinien in der Fig. 1 durch die Kreise mit Punkt und die Kreise mit Kreuz angedeutet ist. Feldlinien treten beispielsweise an den durch die Kreise mit Kreuz markierten Stellen auf der Vorderseite 19 in den Sekundärkern 12 ein und an den durch die Kreise mit Punkt markierten Stellen aus dem Sekundärkern 12 heraus und verlaufen in dem Sekundärkern 12 von den Kreisen mit Kreuz zu den Kreisen mit Punkt. Somit umschließen diese Feldlinien die Windungen der Sekundärspule 13 und induzieren dort eine Wechselspannung, die an ein nicht dargestelltes Hochspannungsbordnetz des Fahrzeugs 11 zum Aufladen seiner Traktionsakkumulatoren angelegt wird.

Bei dieser ersten Ausführungsform sind die Windungen der Sekundärspule 13 auf die in x-Richtung nach vorn weisende Vorderseite der Außenhaut 14 geklebt.

In der Fig. 3 ist eine nicht zur Erfindung gehörige Sekundärtransformatoreinheit 10 in einer zweiten Ausführungsform dargestellt. Diese zweite Ausführungsform ähnelt der ersten Ausführungsform, sodass im Folgenden lediglich die Unterschiede ausführlicher beschrieben werden.

Bei dieser zweiten Ausführungsform umhüllt die Außenhaut 14 nicht nur den Sekundärkern 12, sondern auch noch die Sekundärspule 13, und ist nur an der Rückseite 20 mit einem nicht dargestellten Klebstoff angeklebt.

Bei dieser zweiten Ausführungsform sind die Windungen der Sekundärspule 13 auf die Vorderseite 19 des Sekundärkerns 12 geklebt.

In der Fig. 4 ist ein erfindungsgemäßes Fahrzeug 11 mit Elektroantrieb in einer bevorzugten Ausführungsform in Gestalt eines Hybridautos schematisch dargestellt. Dieses Fahrzeug 11 umfasst eine Sekundärtransformatoreinheit 10 in der ersten Ausführungsform, ein vorderes Kennzeichenschild 21 und eine vordere Stoßstange 22.

Bei dieser bevorzugten Ausführungsform ist die Sekundärtransformatoreinheit 10 an der Front des Fahrzeugs 11 angeordnet, indem sie mit der entgegen der x-Richtung nach hinten weisenden Rückseite der Außenhaut 14 an der in x-Richtung nach vorn weisenden Vorderseite der Stoßstange 22 befestigt ist. Außerdem ist das Kennzeichenschild 21 in x-Richtung vor der Sekundärtransformatoreinheit 10 angeordnet, indem es mit seiner entgegen der x-Richtung nach hinten weisenden Rückseite an der Vorderseite der Außenhaut 14 befestigt ist. Dabei ist das Kennzeichenschild 21 derart angeordnet und sind die Windungen der Sekundärspule 13 derart auf der Vorderseite der Außenhaut 14 verlegt, dass das Kennzeichenschild 21 an der von der Sekundärspule 13 umschlossenen Teilfläche dieser Vorderseite anliegt und die Sekundärspule 13 um das Kennzeichenschild 21 herumläuft ohne es zu berühren.

## Patentansprüche

1. Sekundärtransformatoreinheit (10) zur Anbringung an einem Fahrzeug (11) mit Elektroantrieb, umfassend
- wenigstens einen Sekundärkern (12) mit einer Vorderseite (19) und einer Rückseite (20), die den Sekundärkern (12) in einer ersten Richtung (x) begrenzen, und einer Oberseite (15) und einer Unterseite (16), die den Sekundärkern (12) in einer zweiten Richtung (z) begrenzen;
- wenigstens eine Sekundärspule (13), die an dem Sekundärkern (12) angeordnet ist;
**dadurch gekennzeichnet, dass**
- die Sekundärtransformatoreinheit (10) weiter wenigstens eine Außenhaut (14) umfasst, die den ganzen Sekundärkern (12) umhüllt, so dass die Außenhaut (14) gleichzeitig die Vorderseite (19), die Rückseite (20), die Oberseite (15) und die Unterseite (16) des Sekundärkerns (12) vollständig bedeckt, und die Verstärkungsfasern enthält, um dazu ausgebildet zu sein, bei einem Zerbrechen des Sekundärkerns (12) scharfkantige, harte Bruchstücke innerhalb der Außenhaut (14) zurückzuhalten,
- wobei die Außenhaut (14) nur den Sekundärkern (12) umhüllt.

2. Sekundärtransformatoreinheit (10) nach Anspruch 1, wobei
- die Außenhaut (14) zumindest teilweise an dem Sekundärkern (12) befestigt ist.

3. Sekundärtransformatoreinheit (10) nach einem der vorherigen Ansprüche, wobei
- die Außenhaut (14) reißfest ist.

4. Sekundärtransformatoreinheit (10) nach einem der vorherigen Ansprüche, wobei
- die Außenhaut (14) ein Gewebe und/oder eine Maschenware und/oder ein Netz und/oder eine Folie aufweist.

5. Sekundärtransformatoreinheit (10) nach Anspruch 4, wobei
- das Gewebe und/oder die Maschenware und/oder das Netz Aramidfasern und/oder Glasfasern und/oder Kohlenstofffasern aufweist.

6. Sekundärtransformatoreinheit (10) nach einem der vorhergehenden Ansprüche, wobei
- die Verstärkungsfasern Aramidfasern und/oder Glasfasern und/oder Kohlenstofffasern aufweisen.

7. Fahrzeug (11) mit Elektroantrieb, umfassend wenigstens eine Sekundärtransformatoreinheit (10) nach einem der vorherigen Ansprüche.

8. Fahrzeug (11) nach Anspruch 7, wobei
- eine der Sekundärtransformatoreinheiten (10) an einer Front des Fahrzeugs (11) und/oder eine der Sekundärtransformatoreinheiten (10) an einem Heck des Fahrzeugs (11) und/oder eine der Sekundärtransformatoreinheiten (10) an einer linken Seite des Fahrzeugs (11) und/oder eine der Sekundärtransformatoreinheiten (10) an einer rechten Seite des Fahrzeugs (11) und/oder eine der Sekundärtransformatoreinheiten (10) an einem Boden des Fahrzeugs (11) und/oder eine der Sekundärtransformatoreinheiten (10) an einem Dach des Fahrzeugs (11) angeordnet ist.

9. Fahrzeug (11) nach Anspruch 8, weiter umfassend
- ein vorderes Kennzeichenschild (21), das in einer Fahrtrichtung vor einer an der Front angeordneten Sekundärtransformatoreinheit (10) angeordnet ist, und/oder ein hinteres Kennzeichenschild, das in Fahrtrichtung hinter einer an dem Heck angeordneten Sekundärtransformatoreinheit (10) angeordnet ist.

## Claims

1. Secondary transformer unit (10) for installation in a vehicle (11) with an electric drive, comprising
- at least one secondary core (12) having a front side (19) and a rear side (20), which delimit the secondary core (12) in a first direction (x), and an upper side (15) and a lower side (16), which delimit the secondary core (12) in a second direction (z);
- at least one secondary coil (13) which is arranged on the secondary core (12); **characterised in that**
- the secondary transformer unit (10) further comprises at least one outer skin (14) which envelopes the entire secondary core (12) such that the outer skin (14) also completely covers the front side (19), the rear side (20), the upper side (15) and the lower side (16) of the secondary core (12),
and contains the reinforcing fibres in order to be designed to hold back sharpedged, hard fragments inside the outer skin (14) when the secondary core (12) is broken,
- wherein the outer skin (14) envelopes only the secondary core (12).

2. Secondary transformer unit (10) according to Claim 1, wherein
- the outer skin (14) is at least partially attached to the secondary core (12).

3. Secondary transformer unit (10) according to any one of the preceding claims,
wherein
- the outer skin (14) is tear-resistant.

4. Secondary transformer unit (10) according to any one of the preceding claims,
wherein
- the outer skin (14) comprises a fabric and/or a knitted fabric and/or a net and/or a film.

5. Secondary transformer unit (10) according to Claim 4, wherein
- the fabric and/or the knitted fabric and/or the net comprises aramid fibres and/or glass fibres and/or carbon fibres.

6. Secondary transformer unit (10) according to any one of the preceding claims,
wherein
- the reinforcing fibres comprise aramid fibres and/or glass fibres and/or carbon fibres.

7. Vehicle (11) with an electric drive, comprising at least one secondary transformer unit (10) according to any one of the preceding claims.

8. Vehicle (11) according to Claim 7, wherein
- one of the secondary transformer units (10) is arranged on a front of the vehicle (11) and/or one of the secondary transformer units (10) is arranged on a rear of the vehicle (11) and/or one of the secondary transformer units (10) is arranged on a left side of the vehicle (11) and/or one of the secondary transformer units (10) is arranged on a right side of the vehicle (11) and/or one of the secondary transformer units (10) is arranged on a bottom of the vehicle (11) and/or one of the secondary transformer units (10) is arranged on a roof of the vehicle (11).

9. Vehicle (11) according to Claim 8, further comprising
- a front licence plate (21) which is arranged in a direction of travel in front of a secondary transformer unit (10) arranged on the front and/or a rear licence plate which is arranged in a direction of travel behind a secondary transformer unit (10) arranged on the rear.

## Revendications

1. Unité de transformateur secondaire (10) destinée à être agencée dans un véhicule (11) à moteur électrique, comprenant
- au moins un noyau secondaire (12) avec une face avant (19) et avec une face arrière (20), qui délimitent le noyau secondaire (12) dans une première direction (x), ainsi qu'avec une face supérieure (15) et avec une face inférieure (16), qui délimitent le noyau secondaire (12) dans une deuxième direction (z) ;
- au moins une bobine secondaire (13), qui est agencée au niveau du noyau secondaire (12);
**caractérisée en ce que**
- l'unité de transformateur secondaire (10) comprend en outre une enveloppe extérieure (14) qui enveloppe l'ensemble du noyau secondaire (12), de telle sorte que l'enveloppe extérieure (14) recouvre complètement et simultanément la face avant (19), la face arrière (20), la face supérieure (15) et la face inférieure (16) du noyau secondaire (12), et qui contient des fibres de renfort pour être conçue afin de retenir des fragments durs à arêtes vives à l'intérieur de l'enveloppe extérieure (14) lorsque le noyau secondaire (12) se casse,
- l'enveloppe extérieure (14) enveloppe seulement le noyau secondaire (12).

2. Unité de transformateur secondaire (10) selon la revendication 1, dans laquelle
- l'enveloppe extérieure (14) est fixée au moins en partie au noyau secondaire (12).

3. Unité de transformateur secondaire (10) selon l'une des revendications précédentes, dans laquelle
- l'enveloppe extérieure (14) est résistante à la déchirure.

4. Unité de transformateur secondaire (10) selon l'une des revendications précédentes, dans laquelle
- l'enveloppe extérieure (14) comporte un tissu et/ou un textile maillé et/ou un filet et/ou un film.

5. Unité de transformateur secondaire (10) selon la revendication 4, dans laquelle
- le tissu et/ou le textile maillé et/ou le filet comportent des fibres d'aramide et/ou des fibres de verre et/ou des fibres de carbone.

6. Unité de transformateur secondaire (10) selon l'une des revendications précédentes, dans laquelle
- les fibres de renfort sont des fibres d'aramide et/ou des fibres de verre et/ou des fibres de carbone.

7. Véhicule (11) à moteur électrique, comprenant au moins une unité de transformateur secondaire (10) selon l'une des revendications précédentes.

8. Véhicule (11) selon la revendication 7, dans laquelle
- l'une des unités de transformateur secondaires (10) est agencée à l'avant du véhicule (11) et/ou l'une des unités de transformateur secondaires (10) est agencée à l'arrière du véhicule (11) et/ou l'une des unités de transformateur secondaires (10) est agencée du côté gauche du véhicule (11) et/ou l'une des unités de transformateur secondaires (10) est agencée du côté droit du véhicule (11) et/ou l'une des unités de transformateur secondaires (10) est agencée au niveau d'un plancher du véhicule (11) et/ou l'une des unités de transformateur secondaires (10) est agencée au niveau d'un toit du véhicule (11).

9. Véhicule (11) selon la revendication 8, comprenant en outre
- une plaque d'immatriculation avant (21) qui est agencée, dans le sens de déplacement, devant une unité de transformateur secondaire (10) agencée à l'avant et/ou une plaque d'immatriculation arrière qui est agencée, dans le sens de déplacement, derrière une unité de transformateur secondaire (10) agencée à l'arrière.
